Europäisches Patentamt

(19) European Patent Office

Office européen des brevets

(11) Numéro de publication : **0 290 434 B1**

(12) **FASCICULE DE BREVET EUROPEEN**

(45) Date de publication du fascicule du brevet :
**14.08.91 Bulletin 91/33**

(51) Int. Cl.$^5$ : **F41H 3/00, C09K 11/06**

(21) Numéro de dépôt : **86906855.1**

(22) Date de dépôt : **25.11.86**

(86) Numéro de dépôt international :
**PCT/FR86/00401**

(87) Numéro de publication internationale :
**WO 88/04025 02.06.88 Gazette 88/12**

(54) **PROCEDE ET ECRAN POUR LA PERTURBATION DE LA TRANSMISSION D'UN RAYONNEMENT INFRAROUGE.**

(43) Date de publication de la demande :
**17.11.88 Bulletin 88/46**

(45) Mention de la délivrance du brevet :
**14.08.91 Bulletin 91/33**

(84) Etats contractants désignés :
**DE GB**

(56) Documents cités :
**DE-A- 3 043 381**
**DE-A- 3 135 586**
**FR-A- 2 344 143**
**FR-A- 2 398 281**
**FR-A- 2 511 840**
**US-A- 3 958 970**
**US-A- 3 992 628**
**US-A- 4 484 195**

(73) Titulaire : **Gravisse, Philippe**
**18 - 20, rue de Presles**
**F-75015 Paris (FR)**

(72) Inventeur : **Gravisse, Philippe**
**18 - 20, rue de Presles**
**F-75015 Paris (FR)**

(74) Mandataire : **Kopacz, William James**
**D.L. SEE c/o CNIT WORLD TRADE CENTER 2**
**B.P. 434**
**F-92053 Paris La Défense (FR)**

## Description

La présente invention concerne un procédé et un dispositif pour la perturbation de la transmission d'un rayonnement électromagnétique produit par une source dans une bande de longueurs d'onde prédéterminée et destiné à être capté par un récepteur destiné à détecter les signaux situés dans ladite bande.

Elle s'applique aux ensembles dans lesquels le générateur est un corps quelconque dégageant de la chaleur et ainsi un rayonnement infrarouge et le détecteur est une caméra ou un téléscope travaillant dans au moins une bande prédéterminée du spectre infrarouge.

Les caméras infrarouges sont aujourd'hui utilisées dans de très nombreuses applications civiles et militaires pour détecter, repérer et poursuivre des objets fixes ou mobiles par l'analyse de leur spectre d'émission infrarouge. On détecte ainsi aisément l'émission infrarouge du moteur d'un véhicule et du propulseur d'un avion ou d'un missile. Cette technique constitue actuellement le seul moyen opérationnel pour la détection et la poursuite des missiles et le guidage des engins d'interception à des longues distances jusqu'à 10000 kms. Pour la détection plusieurs bandes de l'infrarouge fournissent des informations spécifiques généralement liées aux différences de température des corps examinés et l'on considère à ce jour qu'il devient difficile d'avoir la moindre activité en surface qui ne puisse être détectable par l'analyse du spectre de son émission infrarouge réalisé éventuellement en temps réel par un téléscope infrarouge embarqué sur un satellite en orbite géostationnaire et équipé d'un discriminateur et d'un ordinateur ultrarapide.

L'inconvénient du rayonnement infrarouge réside dans l'absorption atmosphérique importante mais il existe une fenêtre de propagation dans l'atmosphère terrestre ayant une longueur d'onde comprise entre 3 et 5 micromètres. Pour cette raison et pour des raisons technologiques majeures, les caméras infrarouges multispectres les plus performantes travaillent dans la bande de longueur d'onde comprise entre 2,2 et 8 micromètres.

Les seules contre-mesures actuelles à l'égard de la détection, du repérage et de la poursuite par analyse du spectre d'une émission infrarouge sont l'utilisation de leurres, l'augmentation artificielle de la densité de l'atmosphère et la perturbation à distance des circuits électroniques du capteur infrarouge. Les leurres sont facilement identifiés grâce aux discriminateurs perfectionnés tandis que les deux autres contre-mesures sont difficiles à mettre en oeuvre et ne sont à ce jour pas encore opérationnelles.

La présente invention a pour objet de concevoir un procédé et un dispositif permettant de perturber sensiblement la transmission d'un rayonnement infrarouge émis par un générateur dans des bandes préférentielles comprise entre 2 et 12 micromètres et capté par un détecteur travaillant dans cette bande. On vise ainsi la perturbation des dispositifs existants pour la détection, le repérage et la poursuite par analyse du spectre d'une émission infrarouge produite par l'objet. Mais l'invention vise également la perturbation de la transmission de rayonnements électromagnétiques d'autres longueurs d'onde et notamment des rayonnements laser.

Le procédé selon la partie caractérisante de la revendication 1 consiste d'une manière générale à interposer entre ladite source et ledit récepteur un écran absorbant au moins une partie du rayonnement émis dans ladite bande de longueurs d'onde.

Selon l'invention on utilise un écran réfléchissant de plus au moins une partie du rayonnement émis dans ladite bande de longueurs d'onde, et qui absorbe au moins une partie du rayonnement émis dans ladite bande de longueurs d'onde pour le réémettre à des longueurs d'onde situées à l'extérieur de ladite bande.

Pour la perturbation d'une émission de rayonnement infrarouge on utilise suivant l'invention un écran qui absorbe le rayonnement infrarouge dans la bande de longueur d'onde comprise entre 2 et 12 micromètres.

Suivant une variante le procédé selon l'invention consiste à utiliser un écran qui absorbe le rayonnement infrarouge dans une bande de longueur d'onde inférieure à 2 micromètres et le réémet dans la bande de longueur d'onde comprise entre 2 et 12 micromètres.

L'invention concerne également un écran pour la mise en oeuvre du procédé selon l'invention.

L'écran selon l'invention est constitué d'une matrice organique contenant une série de matières luminescentes et/ou fluorescentes de dopage et de préférence lesdites matières de dopage forment au moins une cascade lumineuse.

On entend par cascade lumineuse, un système comprenant une ou plusieurs substances optiquement actives qui soumis à une radiation électromagnétique incidente de longueur d'onde J1, réémet une radiation électromagnétique de longueur d'onde J2 généralement supérieur à J2, le décalage de longueur d'onde pouvant être augmenté par l'utilisation "en cascade" de substances optiquement actives différentes se relayant entre elles.

De telles matrices dopées sont déjà connues dans leurs applications dans le spectre de la lumière visible et notamment pour l'amélioration du rendement des dispositifs photovoltaïques et pour favoriser le développement de plantes (FR-A-2246078 et FR-A-2511840 du présent déposant).

On a maintenant trouvé que ces matrices peuvent également être utilisées dans d'autres longueurs d'onde

2

EP 0 290 434 B1

et notamment dans le spectre infrarouge pour absorder, réfléchir et modifier par changement de longueur d'onde un rayonnement infrarouge. La présente invention est basée sur cette découverte tout à fait inattendue.

Pour la perturbation de la transmission d'un rayonnement infrarouge à l'aide d'un écran selon l'invention la bande d'absorption de la cascade lumineuse est comprise dans les longueurs d'onde entre 2 et 12 micromètres et la bande d'émission est située dans les longueurs d'onde supérieures à 12 micromètres.

Suivant une variante de l'écran selon l'invention la bande d'absorption de la cascade lumineuse est située dans les longueurs d'onde inférieures à 2 micromètres tandis que sa bande d'émission est située dans des longueurs d'onde comprise entre 2 et 12 micromètres.

La bande de 2 à 12 micromètres correspond aux longueurs d'onde couvertes par les caméras et téléscopes infrarouges actuels et couvre notamment la fenêtre de propagation dans l'atmosphère terrestre. L'écran selon l'invention permet aussi de perturber totalement le fonctionnement de ces caméras et téléscopes et les rend quasi aveugles.

Selon l'invention lesdites matières de dopage sont de matières cycliques aromatiques comprenant de l'ordre de 5 à 15 noyaux et elles comprennent au moins l'une des matières suivantes :
matières hydroxyl avec groupes cétoniques, groupes amino à doubles liaisons carbonés, groupes amino conjugés à des amino quartenaires, groupes anmino conjugés à des amino quartenaires et des groupes cétoniques, groupes amino conjugés à un groupe cétonique.

De préférence les matières de dopage sont introduites dans ladite matrice par greffage chimique. Mais elles peuvent également être présentes en dispersion homogène.

Selon la présente invention ladite matrice organique contient au moins l'une des matières suivantes :
copolymères vinyliques, polyéthylène, copolymères polyéthylène — PMMA, copolymères polyéthylène — polystyrène, et copolymères PMMA — EVA — polystyrène.

Suivant un mode de réalisation particulièrement avantageux l'écran selon l'invention comporte une couche absorbante, une couche réfléchissante et une couche à absorption — émission. Un tel écran peut être réalisé par co-extrusion.

L'écran selon l'invention peut se présenter sous forme d'une feuille souple ou semi rigide ou encore sous forme d'une plaque rigide.

Suivant un mode de réalisation particulier de l'invention l'écran comporte de plus des matières de dopage formant des cascades lumineuses dont la bande d'absorption couvre une partie du spectre du rayonnement solaire tandis que leur bande d'émission couvre uniquement les bandes de longueur d'onde favorisant la photosynthèse des plantes. Un tel écran peut servir d'élément de couverture pour des serres agricoles (voir FR-A-2511840). Dans le cas d'un conflit militaire les serres agricoles peuvent servir à abriter des véhicules militaires pour les protéger contre toute détection par des caméras infrarouges.

D'autres réalisations et avantages de l'invention ressortiront de la description, qui va suivre, et en se référant aux dessins annexés illustrant schématiquement plusieurs modes de réalisation du procédé et de l'élément de filtre suivant la présente invention. Sur ces dessins :

| | |
|---|---|
| la figure 1 | est une vue schématique correspondant à celle de la figure 1 illustrant un premier mode de réalisation préféré du procédé et de l'élément de filtre suivant la présente invention, |
| la figure 2 | est une vue schématique correspondant à celle de la figure 1 illustrant un deuxième mode de réalisation préféré du procédé et de l'élément de filtre suivant la présente invention, |
| les figures 3 et 4 | montrent l'effet d'absorption et d'émission en % de l'énergie de rayonnement en fonction de la longueur d'onde des cascades lumineuses utilisées suivant deux variétés de l'invention, et |
| la figure 5 | est une vue en coupe partiellement en élévation d'une serre agricole recouverte d'un écran selon l'invention. |

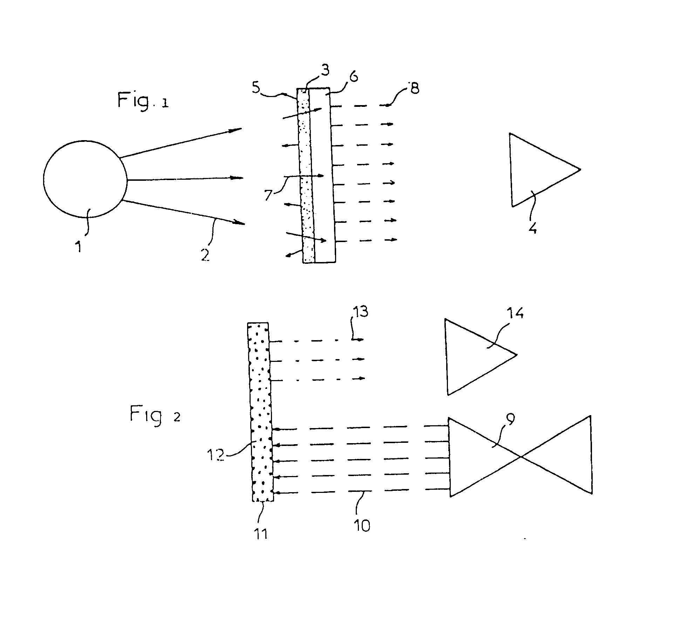

A la figure 1 on voit une source de rayonnement (1) produisant un rayonnement (2) et un détecteur (4) destinés a détecter et repérer la source (1) grâce à l'analyse du spectre du rayonnement (2). La source (1) est un corps dégageant la chaleur, par exemple le moteur d'un véhicule, ce qui correspond à l'émission d'un rayonnement infrarouge dont la longueur d'onde est fonction de la température de la source. Dans le cas le détecteur (4) est constitué par une caméra ou un télescope infrarouge travaillant dans une bande de longueur d'onde comprenant celle du rayonnement (2).

Pour les raisons exposées ci-dessus la bande de longueur d'onde utilisée dans la pratique pour la détection infrarouge est limitée à des bandes préférentielles comprises entre 2 et 12 micromètres.

En vue de la perturbation de la transmission d'un tel rayonnement (2) entre la source (1) et le détecteur

3

(4) on dispose selon l'invention entre ces deux éléments un écran (3). Suivant une première variante cet écran (3) absorbe le rayonnement (2), figure 1. Dans le mode de réalisation représenté à la figure 1 l'écran (3) comprend une première couche (5) réfléchissant le rayonnement (2) et une deuxième couche (6) absorbant le rayonnement (2) pour le réémettre dans une autre bande de longueur d'onde située à l'extérieur du spectre de fonctionnement du détecteur (4). Les trois effets absorption, réfléchissement et absorption — réémission peuvent bien entendu être combinés dans un même écran (3).

Ce procédé de perturbation a pu être conçu grâce à la découverte par le déposant que les effets des cascades lumineuses jusqu'ici uniquement utilisées dans le spectre de la lumière visible et notamment dans le spectre du rayonnement solaire, peuvent assurer les trois dites fonctions dans d'autres bandes de longueurs d'onde et notamment dans le spectre du rayonnement infrarouge.

L'écran (3) est constitué d'une matrice organique contenant des matières de dopage formant des cascades lumineuses qui absorbent le rayonnement (2) pour le réémettre dans une bande située à l'extérieur de la bande de fonctionnement du récepteur (4). Un choix convenable des cascades lumineuses permet également d'obtenir les effets d'absorption et de réflexion suivant les figures 1 et 2.

La figure 2 illustre un mode de réalisation particulier de l'invention destiné à la perturbation d'un rayonnement situé dans les longueurs d'onde des laser. Dans ce cas un générateur (9) envoie un faisceau de lumière (10) pour détecter par réflexion un objet solide (non représente). Le générateur (9) est combiné avec un récepteur (14) destiné à recevoir le signal réfléchi. Selon l'invention on dispose entre le générateur (9) et l'objet a détecter un écran (11) contenant des matières de dopage (12) formant des cascades lumineuses. L'écran (11) absorbe le rayonnement (10) et réémet un rayonnement d'une longueur d'onde différente (13) qui ne peut plus être détecté par le récepteur (14).

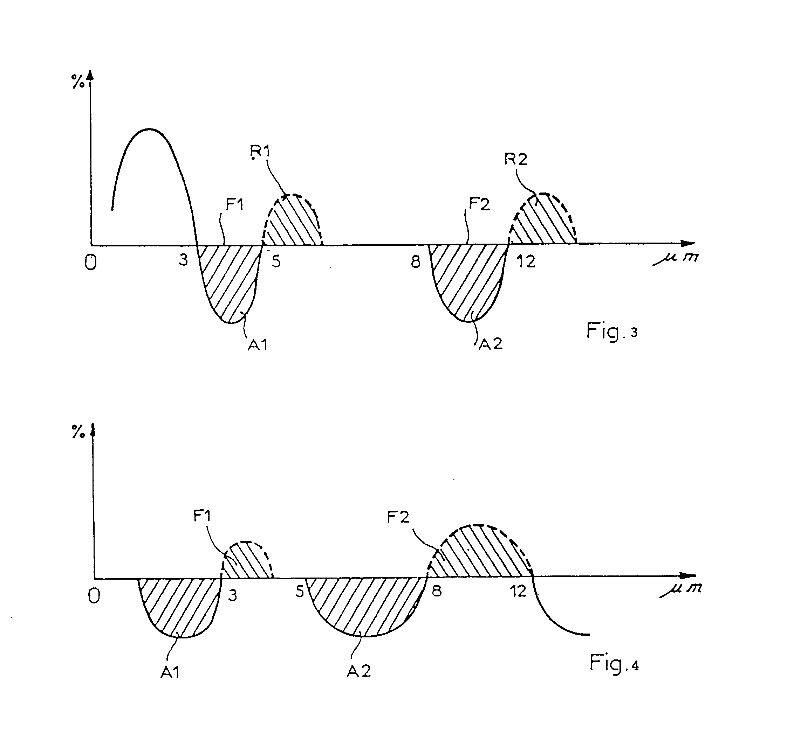

Les figures 3 et 4 illustrent le fonctionnement de deux variantes de l'invention. A ces figures on voit en F1 et F2 deux bandes de longueur d'onde de rayonnements dont la transmission doit être perturbée. Suivant la première variante les cascades lumineuses de l'écran (3, 11) absorbent le rayonnement dans les bandes F1 et F2 comme indiqué en A1 et A2. Les cascades lumineuses réémettent un rayonnement dans une bande de plus grandes longueurs d'onde située à l'extérieur des bandes F1 et F2 comme indiqué en R1 et R2.

Ce rayonnement R1 ou R2 ne peut plus être détecté par le détecteur (4, 14) qui est réglé pour travailler dans les bandes F1 et F2.

Suivant la variante représentée à la figure 4 les cascades lumineuses de l'écran (3, 11) absorbent un rayonnement dans des bandes de longueur d'onde plus petites que les bandes F1 et F2. Les cascades lumineuses émettent alors un rayonnement dans les bandes F1 et F2 qui sera détecté par le détecteur (4, 14). On obtient ainsi un brouillage efficace de la réception et on peut de cette manière réaliser des leurres difficilement décelables.

Les écrans selon l'invention sont constitués de feuilles, de plaques ou de revêtements en des matières plastiques qui se sont avérées particulièrement avantageuses pour les longueurs d'onde visées par la présente invention.

Pour les écrans fonctionnant par réflexion et par absorption dans une première bande de longueurs d'onde et réémission dans une deuxième bande de longueurs d'onde on utilise selon l'invention une ou plusieurs des matières suivantes :

polyéthylène, copolymères polyéthylène — PMMA, copolymères polyéthylène — polystyrène, et copolymères PMMA — EVA — polystyrène (figures 1 et 2).

Les feuilles et plaques formant les écrans (3) figure 1 contiennent selon l'invention des matières scintillantes et/ou luminescentes introduites en dispersion homogène et qui forment des cascades lumineuses. Pour obtenir cet effet de cascade lumineuse on utilise au moins deux et de préférence au moins quatre matières de dopage différentes.

Ces matières de dopage sont d'une manière générale des matières cycliques aromatiques contenant plusieurs noyaux et de préférence 10 à 15 noyaux.

Selon l'invention les écrans (3) contiennent au moins deux matières de dopage des groupes suivants :
matières hydroxyl avec groupes cétoniques
groupes amino avec doubles liaisons carbonés,
groupes amino conjugés avec des amino quartenaires
groupes amino conjugés avec des amino quartenaires et des groupes cétoniques
groupes benzène — naphtène.
groupes phényl — benzène liés
groupes à doubles liaisons reliant les cycles aromatiques groupes nitriles associés
De préférence on utilise selon l'invention au moins un groupe amino conjugé à un groupe cétonique.

Suivant un autre mode de réalisation préféré on utilise comme matières de dopage un tri-fluoro-méthacrylate, un di-benzatron, un oxybenzanyle, ou encore un dioxy-benzatron. La dernière dite matière contient par exemple 9 noyaux et 7 liaisons libres.

Dans ces derniers cas la matrice organique contient au moins un des polymères ou copolymères suivants:

polyéthylène basse densité

polyéthylène — polybutyl — butyl — vinyl — acétate

éthyl — vinyl — acétate de basse densité

polystyrène,

polyéthylène — PMMA

polyéthylène — éthyl — vinyl — acétate

PMMA — éthyl — vinyl — acétate

polyéthylène — acide acrylique — acrylique modifié

polyurénidine

polytétrafluorotène

polyfluorotène — PMMA

Les matières de dopage sont de préférence introduites par greffage chimique.

Ces différentes matières de dopage sont combinées pour former des cascades lumineuses dont les spectres d'absorption et d'émission correspondent aux exigences des effets de perturbation recherchés par l'invention comme exposé plus en détails ci-dessus. La structure et le fonctionnement de telles cascades lumineuses sont décrites en détails dans le FR-A-2346858 du présent déposant.

Suivant un mode de réalisation préféré l'écran selon l'invention pour la perturbation de la transmission d'un rayonnement infrarouge est constitué d'un film complexe réalisé par coextrusion et qui comporte une première couche extérieure fonctionnant par absorption du rayonnement, une couche intermédiaire fonctionnant par réflexion du rayonnement et une deuxième couche extérieure fonctionnant par absorption et réémission dans une autre bande de longueur d'onde. Un tel écran permet de rendre quasi aveugles les caméras infrarouges fonctionnant dans des longueurs d'onde comprises entre 2 et 12 micromètres.

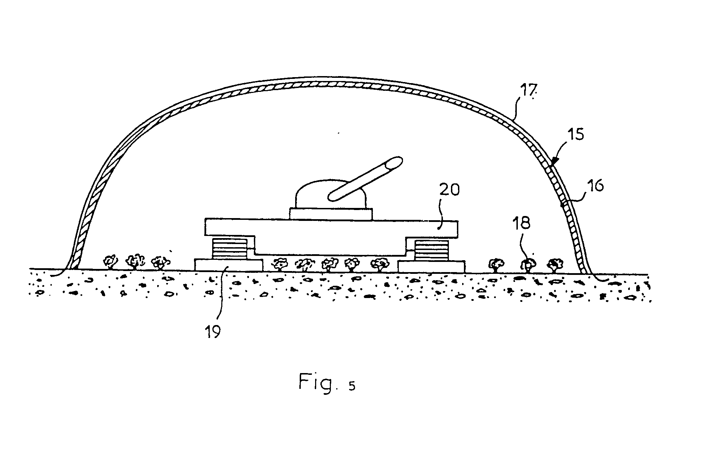

La figure 5 montre une application particulièrement avantageuse d'un mode de réalisation de l'écran selon l'invention. A cette figure on voit une serre agricole (15) constituée d'éléments de charpente (16) sur lesquels est disposée une feuille de revêtement souple (17) constitué par un écran selon l'invention. Cet écran comporte de plus des matières de dopage qui forment des cascades lumineuses dont la bande d'absorption couvre certaines longueurs d'onde du rayonnement solaire tandis que leur bande d'émission couvre uniquement les bandes de longueur d'onde favorisant la photosynthèse des plantes. De telles cascades sont décrites dans la demande de brevet FR-A-2511840 du déposant. La feuille (17) favorise alors le développement des plantes (18). En cas de besoin on peut abriter dans la serre (15) un véhicule militaire (20) pour le protéger contre toute détection par des caméras infrarouges. En vue d'une telle utilisation on aménage entre les plantes une piste de roulement (19) pour les véhicules (20).

Suivant une variante particulière les cascades lumineuses dont la réémission favorise la photosynthèse des plantes sont du type qui absorbent de plus 7 du rayonnement d'une longueur d'onde comprise entre 8 et 12 micromètres.

Pour d'autres applications notamment pour la perturbation des autodirecteurs infrarouges les cascades lumineuses présentent une bande d'absorption comprise entre 3 et 5 micromètres et une bande de réémission comprise entre 5 et 8 micromètres.

## Revendications

1. Procédé pour la perturbation de la transmission d'un rayonnement infra-rouge produit par une source dégageant de la chaleur dans une bande de longueur d'onde prédéterminée et destiné à être capté par un capteur infra-rouge destiné à détecter les signaux situés dans ladite bande, caractérisé en ce qu'il consiste à interposer entre la source (1) et le récepteur (4) un écran comportant une matière luminescente et/ou scintillante absorbant au moins une partie du rayonnement émis dans ladite bande de longueur d'onde pour la réémettre à des longueurs d'onde situées à l'extérieur de ladite bande ; et réfléchissant, au moins une partie du rayonnement émis dans ladite bande de longueur d'onde.

2. Procédé selon la revendication 1 caractérisé en ce que l'écran (3) absorbe le rayonnement infra-rouge dans certaines bandes de longueurs d'onde comprises entre entre 2 et 12 micromètres.

3. Procédé selon l'une quelconque des revendications 1 ou 2, caractérisé en ce qu'il consiste à utiliser un écran (3) qui absorbe le rayonnement infra-rouge dans une bande de longueur d'onde inférieure à 2 micromètres et le réémet dans la bande de longueur d'onde comprise entre 2 et 12 micromètres.

4. Procédé selon l'une quelconque des revendications 1 à 2, pour la perturbation de la détection d'un objet par réflexion d'un faisceau lumineux du type laser émis par un générateur (9) et dont le signal de réflexion est détecté par un récepteur (14), caractérisé en ce qu'il consiste à disposer l'écran (11) entre l'objet à détecter et l'ensemble générateur-récepteur (9, 14).

5. Ecran de perturbation de la détection infra-rouge pour la mise en oeuvre du procédé selon l'une quelconque des revendications 1 à 4, caractérisé en ce qu'il est constitué d'une matrice organique contenant une série de matières de dopage luminescentes ou scintillantes.

6. Ecran selon la revendication 5 pour la mise en oeuvre du procédé suivant l'une quelconque des revendications 1 à 6, caractérisé en ce que lesdites matières de dopage forment au moins une cascade lumineuse.

7. Ecran selon la revendication 6, caractérisé en ce que la bande d'absorption de la cascade lumineuse est comprise dans les longueurs d'onde entre 2 et 12 micromètres et en ce que la bande d'émission est située dans les longueurs d'onde supérieures à 12 micromètres.

8. Ecran selon la revendication 6, caractérisé en ce que la bande d'absorption de la cascade lumineuse est située dans les longueurs d'onde inférieures à 2 micromètres tandis que sa bande d'émission est située dans des longueurs d'onde comprises entre 2 et 12 micromètres.

9. Ecran selon l'une quelconque des revendications 5 à 8, caractérisé en ce que lesdites matières de dopage sont des matières cycliques aromatiques comprenant plusieurs noyaux.

10. Ecran selon l'une quelconque des revendications 5 à 9, caractérisé en ce que lesdites matières de dopage comprennent au moins deux matières des groupes chimiques suivants : matières hydroxyl avec groupes cétoniques, groupes amino à double liaisons carbonées, groupes amino conjugués à des amino quaternaires, groupes amino conjugués à des amino quaternaires et des groupes cétoniques, groupes amino conjugués à un groupe cétonique, groupes benzène-naphtène, groupes phényl-benzène liés, groupes à double liaisons reliant les cycles aromatiques, groupes nitriles associés.

11. Ecran selon la revendication 10, caractérisé en ce que la concentration des matières de dopage est de l'ordre de 10 puissance − 3 à 10 puissance − 8 moles/l.

12. Ecran selon l'une quelconque des revendications 5 à 11, caractérisé en ce que les matières de dopage sont introduites par greffage chimique.

13. Ecran selon l'une quelconque des revendications 5 à 12, caractérisé en de que ladite matrice organique contient au moins l'un des polymères ou copolymères suivants : copolymères vinyliques, polyéthylène, copolymères polyéthylène PMMA, copolymères polyéthylène-polystyrène, copolymères PMMA-EVA-polystyrène, polyéthylène basse densité, polyéthylène-polybutyl-butyl-vinyl-acétate, éthyl-vinyl-acétate de basse densité, polystyrène, polyéthylène PPMA, polyéthylène-éthyl-vinyl-acétate, PMMA-éthyl-vinyl-acétate, acétate, polyéthylène-acide acrylique-acrylique modifié, polyurénidine, polytétrafluorotène, polyfluorotène PMMA.

14. Ecran selon l'une quelconque des revendications 5 à 13, caractérisé en ce qu'il comporte une couche absorbante, une couche réfléchissante en une couche à absorption — réémission.

15. Ecran selon l'une quelconque des revendications 5 à 12, caractérisé en ce qu'il comporte de plus des matières de dopage formant des cascades lumineuses dont la bande d'absorption couvre sensiblement le spectre du rayonnement solaire tandis que leur bande d'émission couvre uniquement les bandes de longueur d'onde favorisant la photosynthèse des plantes.

16. Ecran selon la revendication 15, caractérisé en ce que les cascades lumineuses dont la réémission favorise la photosynthèse absorbent de plus le rayonnement d'une longueur d'onde comprise entre 8 et 12 micromètres.

17. Ecran selon la revendication 16, destiné à la perturbation des autodirecteurs infra-rouges, caractérisé en ce que les cascades lumineuses présentent une bande d'absorption comprise entre 3 et 5 micromètres et une bande de réémission comprise entre 5 et 8 micromètres.

18. Ecran selon l'une quelconque des revendications 5 à 15, caractérisé en ce que les matières de dopage comprennent de plus au moins l'une des matières suivantes : tri-fluorométhacrylate, di-benzatron-oxybenzanyle et dioxybenzatron.

## Patentansprüche

1. Verfahren zum Stören der Übertragung einer durch eine Wärmequelle emittierten Infrarotstrahlung in einem vorgegebenen Wellenlängenbereich, wobei die Strahlung von einem Infrarotabsorber absorbiert wird, um in dem Wellenlängenbereich liegende Signale zu messen, dadurch gekennzeichnet, daß zwischen der Quelle (1) und dem Empfänger (4) ein Schirm mit einem lumineszierenden und/oder szintillierenden Stoff angeordnet wird, der wenigstens einen Teil der in dem Wellenlängenbereich emittierten Strahlung absorbiert, um diese in einen Wellenlängenbereich zu reemittieren, der außerhalb des ursprünglichen Bereiches liegt, und daß wenigstens ein Teil der in dem Wellenlängenbereich emittierten Strahlung reflektiert wird.

2. Verfahren nach Anspruch 1, dadurch gekennzeichnet, daß der Schirm (3) die Infrarotstrahlung im Wellenlängenbereich zwischen 2 und 12 Mikrometern absorbiert.

3. Verfahren nach Anspruch 1 oder 2, dadurch gekennzeichnet, daß ein Schirm (3) verwendet wird, der die Infrarotstrahlung im Wellenlängenbereich unterhalb von 2 Mikrometern absorbiert und sie in einen Wellenlängenbereich zwischen 2 und 12 Mikrometer reemittiert.

4. Verfahren nach Anspruch 1 oder 2 zum Stören des Empfangs eines Objekts durch Reflexion eines durch einen Sender (9) emittierten Laserstrahls, wobei das Reflexionssignal durch einen Empfänger (14) gemessen wird, dadurch gekennzeichnet, daß der Schirm (11) zwischen dem zu messenden Objekt und der Sender/Empfänger-Einrichtung (9,14) angeordnet wird.

5. Schirm zum Stören des Infrarotempfangs zur Durchführung des Verfahrens nach einem der Ansprüche 1 bis 4, dadurch gekennzeichnet, daß der Schirm aus einer organischen Matrix besteht, die eine Reihe von lumineszierednen oder szintillierenden Stoffen enthält.

6. Schirm nach Anspruch 5 zur Durchführung des Verfahrens nach einem der Ansprüche 1 bis 5, dadurch gekennzeichnet, daß die Dotierstoffe wenigstens eine Lumineszenzkaskade bilden.

7. Schirm nach Anspruch 6, dadurch gekennzeichnet, daß die Absorptionsbande der Lumineszenzkaskade im Wellenlängenbereich zwischen 2 und 12 Mikrometern liegt und daß die Emissionsbande im Wellenlängenbereich oberhalb von 12 mikrometern liegt.

8. Schirm nach Anspruch 6, dadurch gekennzeichnet, daß die Absorptionsbande der Lumineszenzkaskade in einem Wellenlängenbereich unterhalb von 2 mikrometern liegt, während die Emissionsbande bei Wellenlängen zwischen 2 und 12 mikrometern liegt.

9. Schirm nach einem der Ansprüche 5 bis 8, dadurch gekennzeichnet, daß die Dotierstoffe ringförmige, aromatische Stoffe mit meheren Verzweigungen sind.

10. Schirm nach einem der Ansprüche 5 bis 9, dadurch gekennzeichnet, daß die Dotierstoffe wenigstens zwei Stoffe der folgenden chemischen Gruppen enthalten : Hydroxyl mit ketonischen Gruppen, Aminogruppen mit doppelten Kohlenstoffbindungen, Aminogruppen mit damit verbundenen quaternären Aminos, Aminogruppen mit damit verbundenen quaternären Aminos und Ketongruppen, Aminogruppen verbunden mit einer Ketongruppe, Benzol-Naphten-Gruppen, Phenyl-Benzol-Gruppen, doppelgebundene Gruppen mit damit verbundenen aromatischen Rigen, nitrilgebundene Gruppen.

11. Schirm nach Anspruch 10, dadurch gekennzeichnet, daß die Konzentration der Dotierstoffe zwischen $10^{-3}$ und $10^{-8}$ mol/l liegt.

12. Schirm nach einem der Ansprüche 5 bis 11, dadurch gekennzeichnet, daß die Dotierstoffe durch chemische Einbindung eindotiert sind.

13. Schirm nach einem der Ansprüche 5 bis 12, dadurch gekennzeichnet, daß die organische Matrix wenigstens eine der folgenden Polymere oder Copolymere enthält : Vinylcopolymere, Polyäthylen, copolymeres Polyäthylen PMMA, copolymeres Polyäthylen-Polystyren, copolymeres PMMA-EVA-Polystyren, Polyäthylen needriger Dichte, Polyäthylen-Polybutyl-Butyl-Vinyl-Acetat, Äthyl-Vinyl-Acetat niedriger Dichte, Polystyren, Polyäthylen PPMA, Polyäthylen-Äthyl-Vinyl-Acetat, PMMA-Äthyl-Vinyl-Acetat, Acetat, Polyäthylen-Säure acrylacryl-modifiziert, Polyurenidin, Polytetrafluoroten, Polyfluoroten PMMA.

14. Schirm nach einem der Ansprüche 5 bis 13, dadurch gekennzeichnet, daß eine Absorptionsschicht, eine Reflexionsschicht sowie eine Absorptions/Reflexions-Schicht vorgesehen ist.

15. Schirm nach einem der Ansprüche 5 bis 12, dadurch gekennzeichnet, daß der Schirm mehrere die Lumineszenzkaskade bildende Dotierstoffe enthält, wobei die Absorptionsbande im wesentlichen das Sonnenspektrum abdeckt, während ihre Emissionsbande die Wellenlängenbande der Photosynthese bei Pflanzen abdeckt.

16. Schirm nach Anspruch 15, dadurch gekennzeichnet, daß die Lumineszenzkaskade, deren Reemission dia Photosynthese unterstützt, die meiste Strahlung in einem Wellenlängenbereich zwischen 8 und 12 Mikrometer absorbiert.

17. Schirm nach Anspruch 16 zum Stören von durch Autos emittierter Infrarotstrahlung, dadurch gekennzeichnet, daß die Lumineszenzkaskade ein Absorptionsspektrum zwischen 3 und 5 Mikrometer und eine Reemissionsbande zwischen 5 und 8 Mikrometer besitzt.

18. Schirm nach einem der Ansprüche 5 bis 15, dadurch gekennzeichnet, daß die Dotierstoffe wenigstens einen der folgenden Stoffe enthalten : Trifluormethacrylat, Di-Benzatron-Oxybenzanyl und Dioxybenzatron.

## Claims

1. A process for disrupting the transmission of infrared radiation produced by a heat-emitting source within a predetermined wavelength band and which is to be picked up by an infrared sensor for detecting the signals situated in said band, characterised in that it consists of placing between the source (1) and the receiver (4) a screen comprising a luminescent and/or scintillating material which absorbs at least part of the radiation emitted within said wavelength band to re-emit it to wavelengths situated outside said band ; and reflecting at least part of the radiation emitted within said wavelength band.

2. A process according to Claim 1, characterised in that the screen (3) absorbs the infrared radiation within certain wavelength bands between 2 and 12 micrometres.

3. A process according to any one of Claims 1 or 2, characterised in that it consists of using a screen (3) which absorbs the infrared radiation within a wavelength band of less than 2 micrometres and re-emits it within the wavelength band between 2 and 12 micrometres.

4. A process according to any one of Claims 1 to 2, for disrupting the detection of an object by reflection of a light beam of the laser type emitted by a generator (9) and the reflection signal of which is detected by a receiver (14), characterised in that it consists in arranging the screen (11) between the object to be detected and the generator-receiver unit (9, 14).

5. A screen for disrupting infrared detection for performing the process according to any one of Claims 1 to 4, characterised in that it consists of an organic matrix containing a series of luminescent or scintillating doping materials.

6. A screen according to Claim 5 for performing the process according to any one of Claims 1 to 6, characterised in that said doping materials form at least one luminous cascade.

7. A screen according to Claim 6, characterised in that the absorption band of the luminous cascade is within the wavelengths between 2 and 12 micrometres and in that the emission band is situated within the wavelengths greater than 12 micrometres.

8. A screen according to Claim 6, characterised in that the absorption band of the luminous cascade is situated within the wavelengths less than 2 micrometres, while the emission band thereof is situated within the wavelengths between 2 and 12 micrometres.

9. A screen according to any one of Claims 5 to 8, characterised in that said doping materials are cyclic aromatic materials comprising several nuclei.

10. A screen according to any one of Claims 5 to 9, characterised in that said doping materials comprise at least two materials from the following chemical groups : hydroxyl materials with ketonic groups, amino groups having double carbon bonds, amino groups conjugated to quaternary aminos, amino groups conjugated to quaternary aminos and ketonic groups, amino groups conjugated to a ketonic group, benzene-naphthene groups, linked phenyl-benzene groups, groups having double bonds linking the aromatic rings, associated nitrile groups.

11. A screen according to Claim 10, characterised in that the concentration of the doping materials is of the order of 10 to the power of $-3$ to 10 to the power of $-8$ moles/l.

12. A screen according to any one of Claims 5 to 11, characterised in that the doping materials are introduced by chemical grafting.

13. A screen according to any one of Claims 5 to 12, characterised in that said organic matrix contains at least one of the following polymers or copolymers : vinyl copolymers, polyethylene, polyethylene PMMA copolymers, polyethylene-polystyrene copolymers, PMMA-EVA-polystyrene copolymers, low-density polyethylene, polyethylene-polybutyl-butyl-vinyl-acetate, low-density ethyl-vinyl-acetate, polystyrene, polyethylene PPMA, polyethylene-ethyl-vinyl-acetate, PMMA-ethyl-vinylacetate, acetate, modified polyethylene-acrylic acid-acrylic, polyurenidine, polytetrafluorotene, polyfluorotene PMMA.

14. A screen according to any one of Claims 5 to 13, characterised in that it comprises an absorbent layer, a reflective layer and an absorption/re-emission layer.

15. A screen according to any one of Claims 5 to 12, characterised in that it additionally comprises doping materials forming luminous cascades, the absorption band of which covers approximately the spectrum of solar radiation while their emission band covers solely the wavelength bands promoting photosynthesis in plants.

16. A screen according to Claim 15, characterised in that the luminous cascades, the re-emission of which promotes photosynthesis, additionally absorb the radiation of a wavelength between 8 and 12 micrometres.

17. A screen according to Claim 16, for disrupting infrared seekers, characterised in that the luminous cascades have an absorption band between 3 and 5 micrometres and a band of re-emission between 5 and 8 micrometres.

18. A screen according to any one of Claims 5 to 15, characterised in that the doping materials additionally comprise at least one of the following materials : trifluoro-methacrylate, di-benzatron-oxybenzanyl and dioxybenzatron.

Fig. 1

Fig 2

Fig. 3

Fig. 4

Fig. 5